# EUROPÄISCHE PATENTSCHRIFT

(11) **EP 2 008 983 B1**
(45) Veröffentlichungstag und Bekanntmachung des Hinweises auf die Patenterteilung: **22.07.2009**
(21) Anmeldenummer: 07010026.8
(22) Anmeldetag: 21.05.2007
(51) Int. Cl.: C04B 18/02

(54) **Verfahren zum Herstellen einer Gesteinskörnung und Gesteinskörnung, insbesondere für Baumaterialien**
Method for manufacturing an aggregate and aggregate, in particular for building materials
Procédé de fabrication d'un agrégat et agrégat, en particulier pour matériaux de construction

(43) Veröffentlichungstag der Anmeldung: 31.12.2008
(73) Patentinhaber: Liapor GmbH & Co. KG, 91352 Hallerndorf-Pautzfeld (DE)
(72) Erfinder: Fuchs, Wolfgang, 96110 Schesslitz (DE); Hennek, Paul, 91301 Forchheim (DE)
(74) Vertreter: Schröer, Gernot H.

(56) Entgegenhaltungen:
- EP-A1- 1 561 734
- WO-A-98/45222
- DE-A1- 19 731 653
- DE-B- 1 271 679
- US-A- 4 336 069
- US-A- 4 741 782

## Beschreibung

Die Erfindung betrifft ein Verfahren zum Herstellen einer Gesteinskörnung, insbesondere Leichtzuschlagsgesteinskörnung, insbesondere für Baumaterialien, vorzugsweise Beton, und Gesteinskörnung, insbesondere Leichtzuschlagsgesteinskörnung, für Baumaterialien, insbesondere Beton.

Beton ist ein künstlicher Baustoff, der aus einem Gemisch von Zement, Gesteinskörnung und Wasser durch Erhärten des Zement-Wasser-Gemisches entsteht (siehe Scholz/Wiese - "Baustoffkenntnis", Werner Verlag, 15. Auflage, 2003, Seiten 247 bis 269).

Zemente sind hydraulische Stoffe, die im Beton als Bindemittel eingesetzt werden und hauptsächlich aus Calciumsilicaten und Calciumaluminaten bestehen, die mit Wasser chemisch reagieren und dabei entsprechende Hydrate bilden. Diesen Vorgang nennt man Hydratation oder hydraulisches Erhärten. Der erhärtete Zement ist wasserbeständig und verleiht dem Beton eine hohe Festigkeit. Es gibt eine Vielzahl von Zementen unterschiedlicher Zusammensetzungen (siehe Scholz/Wiese - "Baustoffkenntnis", Werner Verlag, 15. Auflage, 2003, Seiten 179 bis 189 und DIN EN 197 (02.01)).

Leichtbeton hat eine geringere Trockenrohdichte z.B. für eine bessere Wärmedämmung oder ein geringeres Gewicht und wird durch Zugabe von Leichtzuschlägen, beispielsweise Gesteinskörnungen aus Blähton, Blähschiefer, Blähglas, Bims oder Kesselsand, und/oder durch Porigkeit des Betongefüges hergestellt (Scholz/Wiese - "Baustoffkenntnis", Seiten 337 bis 342).

EP 1 561 734 B1 offenbart einen Zuschlagstoff mit Leichtgesteinskörnung für die Betonherstellung bestehend aus einem oder mehreren Zusatzstoffen sowie einem hydraulischen Bindemittelgemisch, in welchem Asche mit einem Calciumoxidanteil (Freikalkanteil) von 10 bis 20 Gew.% bezogen auf 100 Gew.% Asche vorliegt. Die Leichtgesteinskörnung liegt in Form von Kugeln oder Pellets vor und zeigt einen schalenartigen Aufbau, wobei im Kernbereich vorwiegend Zement und im Randbereich fast ausschließlich Asche vorliegen. Die Asche im hydraulischen Bindemittel wird aus der Rinden- oder Holzverbrennung gewonnen. Als weiteres hydraulisches Bindemittel kann Zement vorliegen. Das Verhältnis von Asche zu Zement ist bevorzugt 1 : 1. EP 1 561 734 B1 offenbart ferner ein Verfahren zur Herstellung des Zuschlagstoffes, bei dem in einem ersten Verfahrensschritt der Großteil an Asche mit dem weiteren hydraulischen Bindemittel wie Zement sowie gegebenenfalls Zusatzstoffen in einem Kaskaden- oder Freifallmischer homogen vermischt wird, in einem zweiten Verfahrensschritt die Leichtgesteinskörnung des Zuschlagstoffes durch Pelletieren ausgebildet wird und der verbleibende Anteil an Asche in einem oder mehreren nach dem ersten Pelletierschritt nachgeschalteten Schritten zugegeben wird. Durch dieses mehrstufige Verfahren ergibt sich der schalenförmige Aufbau der Zuschlagstoffpartikel. Es wird in EP 1 561 734 B1 beschrieben, dass der in dem hydraulischen Bindemittel in Form von Asche vorliegende Freikalkgehalt insbesondere für den Pelletierprozess von wesentlicher Bedeutung sei, da der relativ hohe Gehalt an Kalziumoxid eine rasche Reaktion mit dem weiteren hydraulischen Bindemittel, nämlich Zement, mit sich bringe, so dass der erfindungsgemäße Zuschlagstoff in wenigen Minuten lagerfähig sei.

US 4,741,782 offenbart ein Verfahren zum Herstellen von Leichtzuschlagspellets für Beton, bei dem eine Mischung aus mehr als 60 Gew.-% Flugasche, 1 bis 25 Gew.-% Zement und 1 bis 10 Gew.-% Füllstoff, insbesondere Silikastaub, hergestellt wird und in einer Pelletiereinrichtung zu dieser Mischung 1 bis 18 % bezogen auf das Gesamtgewicht, Wasser und 0 bis 3 % bezogen auf das Zementgewicht chemische Beschleuniger zugesetzt werden und Pellets eines vorgegebenen Größenbereichs erzeugt werden. Die erzeugten Pellets werden in Luft bei einer Temperatur von weniger als 149 °C, insbesondere bei Umgebungstemperaturen, ausgehärtet. Der Zement dient als Bindemittel zur Unterstützung der Bindungseigenschaften der Flugasche. Die verwendete Flugasche ist eine bei der Verbrennung von Kohle entstehende feine Asche mit kleineren Partikeln als die Bodenasche (Feuerraumasche), wobei die Flugaschepartikel hauptsächlich aus Aluminaten und Eisen bestehen und eingekapselt sind mit Silika. Es wird zwischen einer Klasse C und einer Klasse F Flugasche unterschieden. Klasse C Flugasche enthält mehr Kalk (CaO, zwischen 10 und 32 Gew.-%) und ist dadurch mehr puzzolanisch als Klasse F Flugasche, so dass weniger (1 bis 5 Gew.-%) Zement verwendet werden kann als bei Klasse F Flugasche (8 bis 25 Gew.-% Zement). Das Wasser dient zur Hydratation der Flugasche und des Zements zum Erzeugen einer Bindung zwischen der Flugasche und dem Zement. Der chemische Beschleuniger beschleunigt das Aushärten des Zements und kann insbesondere Calciumcarbonat umfassen.

Baukalke sind als Bindemittel für Mauermörtel und Putzmörtel sowie zum Weißen und für Kalkfarbanstriche zu verwenden, Feinkalk auch zur Herstellung von Kalkstandsteinen. Bei Baukalken unterscheidet man, beispielsweise in der DIN EN 459, Luftkalke und hydraulische Kalke. Luftkalk ist im Wesentlichen gelöschter Kalk oder Calciumhydroxid oder Kalkhydrat Ca(OH)₂, der durch Löschen von gebranntem Kalk (CaO), der durch Brennen von Kalkstein oder Calciumcarbonat CaCO₃ erzeugt wurde, mit Wasser (H₂O) hergestellt wird. Der Luftkalk hat seinen Namen daher, dass beim Erhärten der gelöschte Kalk Ca(OH)₂ mit Wasser und Kohlendioxid aus der Luft, die zusammen Kohlensäure (H₂CO₃) bilden, zu erhärtetem Kalk (Kalkstein, Ca-CO₃) und Wasser exotherm reagiert. Hydraulische Kalke enthalten Bestandteile, die durch Reaktion mit Wasser zementähnlich unter Hydratation erhärten, wie auch unter Wasser erstarrende und erhärtende hydraulische Verbindungen auf Basis von Ton, der im Wesentlichen Kieselsäure (SiO₂), Tonerde (Al₂O₃) und Eisenoxid (Fe₂O₃) enthält (vgl. Scholz/Wiese - "Baustoffkenntnis", s.o., Seiten 166 bis 173).

Schließlich sind auch latent-hydraulische Stoffe und Puzzolane bekannt. Latent-hydraulische Stoffe umfassen hydraulisch erhärtende Bestandteile, deren Reaktion mit Wasser und die damit verbundene Erhärtung erst durch eine zweite Komponente wie Kalkhydrat oder Zement als Anreger ausgelöst oder angeregt werden muss. Puzzolane reagieren chemisch mit Wasser und Kalkhydrat Ca(OH)₂ als Reaktionspartner. Die Reaktionsfähigkeit der Puzzolane beruht wesentlich aus dem Vorhandensein von reaktionsfähiger Kieselsäure (SiO₂ in energiereichem Zustand. Ein Beispiel für einen latent-hydraulischen Stoff ist Hüttensand mit Kalk oder Kalkhydrat abspaltendem Portlandzement als Anreger. Bei Puzzolanen unterscheidet man natürliche Puzzolane, darunter die eigentliche Puzzolanerde oder Trass, und künstliche Puzzolane, zu denen insbesondere Steinkohlenflugasche, Silikastaub, Metakaolin oder gebrannte, silikatische Gesteinmehle (Phonolith, getempertes Lavamehl oder Ziegelmehl) zählen (vgl. Scholz/Wiese - "Baustoffkenntnis", s.o., Seiten 173 bis 179).

Der Erfindung liegt nun die Aufgabe zugrunde, ein neues Verfahren zum Herstellen einer Gesteinskörnung und eine neue Gesteinskörnung, die als Zuschlag für Baumaterialien, insbesondere Beton, verwendbar ist, anzugeben.

Diese Aufgabe wird hinsichtlich des Verfahrens mit den Merkmalen des Anspruchs 1 und hinsichtlich der Gesteinskörnung mit den Merkmalen des Anspruchs 10 gelöst. Weiterbildungen, Ausgestaltungen und Anwendungen ergeben sich aus den jeweils abhängigen Ansprüchen.

Das Verfahren zum Herstellen einer Gesteinskörnung, insbesondere Leichtzuschlagsgesteinskörnung, insbesondere für Baumaterialien, vorzugsweise Beton, umfasst die folgenden Verfahrensschritte:
a) Herstellen einer homogenen Ausgangsmischung aus
   - 1 bis 10 M.-% (Massenprozent) Zement,
   - 20 bis 85 M.-% gebranntem Ton,
   - 10 bis 40 M.-% Pflanzenverbrennungsasche
   - 0 bis 35 M.-% Flugasche,
   - 0 bis 1 M.-% weitere Zusatzstoffe,
   - Wasser,
   wobei die angegebenen M-% auf die Gesamttrockenmasse der Ausgangsmischung ohne Wasser bezogen sind und
   wobei das Verhältnis der Masse des Wassers zu der Gesamttrockenmasse der Ausgangsmischung zwischen 0,20 und 0,35 beträgt.
b) Herstellen von Formlingen aus der Ausgangsmischung,
c) Abbinden der Formlinge bei Abbindetemperaturen unter 80 °C, wobei die Formlinge zu Partikeln (oder: Körnern) der Gesteinskörnung erhärten.

Die Gesteinskörnung, insbesondere Leichtzuschlags-Gesteinskörnung, ist insbesondere für Baumaterialien, vorzugsweise Beton, vorgesehen und umfasst Partikel (oder: Körner), die enthalten
- 1 bis 10 M.-% (Masseprozent) erhärteten Zement,
- 0 bis 35 M.-% Flugaschepartikel,
- 20 bis 85 M.-% Partikel aus gebranntem Ton,
- 10 bis 40 M.-% Pflanzenverbrennungsaschepartikel,
- 0 bis 1 M.-% weitere Zusatzstoffe,
wobei die Summe der M.-% aller enthaltenen Stoffe 100 M.-% beträgt.

Gemäß der Erfindung kann die Gesteinskörnung mit einem geringen Energieaufwand hergestellt werden, da das Abbinden bei vergleichsweise niedrigen Temperaturen erfolgt. Die Gesteinskörnung gemäß der Erfindung benötigt außerdem aufgrund latent-hydraulischer und/oder puzzolanischer Bindungseigenschaften des gebrannten Tones und der Pflanzenverbrennungsasche nur einen vergleichsweise geringen Anteil an Zement. Der Zement wird nicht als Bindemittel benötigt, sondern lediglich als Anreger für die hydraulische Reaktion der latent-hydraulischen Komponente(n). Ferner kann die Gesteinskörnung gemäß der Erfindung als Leichtzuschlag für Baustoffe wie Beton hergestellt werden. Es wird also eine ökologisch und ökonomisch sinnvolle Gesteinskörnung und Herstellung derselben vorgeschlagen.

Die Pflanzenverbrennungsasche weist im Allgemeinen eine Partikelgröße von einer Minimalpartikelgröße bis zu einer Maximalpartikelgröße, die in einem Bereich von 1 mm bis 2 mm gewählt ist, auf, wobei die Partikel der Pflanzenverbrennungsasche vorzugsweise Partikelgrößen aufweisen, die von (etwas über) 0 mm als Minimalpartikelgröße bis zur Maximalpartikelgröße reichen.

Die Pflanzenverbrennungsasche kann aus der Verbrennung verschiedener brennbarer Pflanzen stammen, beispielsweise aus der Verbrennung von Stroh und/oder Gräsern und/oder Schilfgräsern wie Elefantengras und/oder Mais.

Besonderes vorteilhaft ist eine Ausführungsform, bei der die Pflanzenverbrennungsasche Holzverbrennungsasche ist oder enthält. Die verwendete Holzverbrennungsasche ist insbesondere Asche aus der Verbrennung von Frischholz oder niedrig belastetem Altholz, insbesondere Altholz der Altholzkategorie A I oder A II gemäß der Altholzverordnung (Bundesgesetzblatt I 2002, Seite 3302), beispielsweise aus Biomasseheizkraftwerken oder anderen Verbrennungsanlagen.

Die Pflanzenverbrennungsasche, insbesondere Holzverbrennungsasche, enthält vorzugsweise wenigstens 50 M-%, bezogen auf ihre Trockenmasse, Feuerraumasche und, als komplementären Anteil, Flugasche aus der Pflanzenverbrennung, insbesondere Holzverbrennung.

Feuerraumasche oder Rostasche verbleibt als Asche nach dem Verbrennungsvorgang in dem Feuerraum oder an der Feuerstelle unten als Rückstand (z.B. als Rückstand der Glut), während Flugasche Asche ist, die aus dem entweichenden Rauch oder als suspendierte Feststoffteilchen in der Luft gewonnen wird, beispielsweise mit Hilfe von Filtern und deshalb auch als Filterasche bezeichnet wird.

Die Feuerraumasche aus der Pflanzenverbrennung, insbesondere aus der Holzverbrennung, enthält, wie Untersuchungen der Erfinder ergaben, typischerweise 40 bis 50 % reaktive Kieselsäure und hat somit latent-hydraulische Eigenschaften und enthält darüber hinaus typischerweise 30 bis 40 % Branntkalk, der Calciumoxid (CaO) enthält, das als Anreger für latent-hydraulische Komponente(n) und besonders als Reaktant für die Hydratation puzzolanischer Komponente(n) in der Ausgangsmischung dienen kann.

Die Feuerraumasche weist unterschiedlich große und vor allem wesentlich größere Partikel auf als Flugasche.

Zur Herstellung der gewünschten Partikelgrößenverteilung bis zur Maximalpartikelgröße wird die Feuerraumasche aus der Pflanzenverbrennung, insbesondere Holzverbrennung, vorzugsweise zunächst mittels dafür vorgesehener mechanischer Zerkleinerer mechanisch zerkleinert, insbesondere gebrochen, und dann abgesiebt, derart, dass man die gewünschte Körnung von einem unteren Wert, insbesondere 0 mm, bis zur ausgewählten Maximalpartikelgröße von 1 mm bis 2 mm erhält.

Durch das mechanische Zerkleinern, insbesondere Brechen, der Feuerraumasche wird eine optimale spezifische Oberfläche erzeugt, die darüber hinaus besonders reaktiv ist für die Hydratation oder das hydraulische Aushärten der latent-hydraulischen Komponenten in der Pflanzenverbrennungsasche, insbesondere Holzverbrennungsasche.

Zum Brechen der Feuerraumasche werden vorzugsweise Walzenbrecher mit Walzen, deren Walzabstand auf die gewünschte maximale Partikelgröße, hier 1 mm oder 2 mm, angepasst ist, eingesetzt. Es können aber auch sogenannte Turbobrecher mit zertrümmernden Hämmern oder Backenbrecher eingesetzt werden.

Die Flugasche aus der Pflanzenverbrennung, insbesondere Holzverbrennung, hat eine Partikelgröße von in der Regel unter 0,25 mm und muss deshalb nicht mehr weiter zerkleinert werden, sondern passt in die Sieblinien beim Siebvorgang, verbleibt also nach dem Absieben in der Pflanzenverbrennungsasche, insbesondere Holzverbrennungsasche, für die Ausgangsmischung. Auch die Pflanzenverbrennungs-Flugasche, insbesondere Holzverbrennungs-Flugasche, enthält im Allgemeinen latent-hydraulische Komponenten.

Zum Anregen der hydraulischen Reaktion der latent-hydraulischen Komponenten in der Pflanzenverbrennungsasche, insbesondere Holzverbrennungsasche, ist der der Ausgangsmischung zugesetzte Zement vorgesehen, der als Feinanteil mit einer Partikelgröße unter 0,25, insbesondere unter 0,1 mm, vorzugsweise unter 0,01 mm, vorgesehen wird und insbesondere ein Portlandzement, vorzugsweise ein Portlandkompositzement wie z.B. CEM II/B-M (S-LL), ist oder, für eine noch höherere Wirksamkeit, auch ein CEM I Zement sein kann.

Der verwendete gebrannte Ton ist im Allgemeinen puzzolanisch. Der gebrannte Ton reagiert nun aufgrund seiner puzzolanischen Eigenschaften mit dem freien Kalk der Pflanzenverbrennungsasche, insbesondere der Holzverbrennungsasche oder der Feuerraumasche, und trägt somit zur Bindung in den fertigen ausgehärteten Gesteinskörnungspartikeln bei. Die puzzolanische Bindung beruht dabei hauptsächlich auf Calciumsilicat-Verbindungen im ausgehärteten Zustand. Die puzzolanischen Komponenten des gebrannten Tons reagieren dabei hydraulisch mit dem Wasser und dem Kalk der Pflanzenverbrennungsasche, insbesondere Holzverbrennungsasche. Ein geeigneter gebrannter Ton enthält einen oder ist ein bei der Herstellung von Blähton verwendeter oder entstandener gebrannter Ton und/oder Metakaolin, insbesondere bei der Herstellung von Blähglas anfallendes Metakaolin, und/oder bei der Ziegelproduktion verwendeter oder entstandener gebrannter Ton, beispielsweise Ziegelsplitt, -mehl, -bruch oder -schwachbrannt.

Wenn zusätzlich Flugasche in der Ausgangsmischung und/oder der Gesteinskörnung vorgesehen wird, so ist diese vorzugsweise eine bei der Verbrennung von Kohle, insbesondere Steinkohle, entstandene Flug- oder Filterasche oder eine Flugasche nach DIN EN 450 oder DIN EN 450-1.

Die Gesteinskörnungs-Formlinge werden in der Regel durch Granulieren, d.h. als Granalien, erzeugt. In einer Ausführungsform wird zum Mischen der Ausgangsmischung und Granulieren ein Chargenmischer oder Granuliermischer verwendet, der beide Funktionen in einem Arbeitsgang erfüllt. Alternativ zu einem Chargenmischer oder Granuliermischer kann auch ein Granulierteller und ein vorgeschalteter Mischer verwendet werden. Bei dieser zweistufigen Anlage kann die Sieblinie und die Schüttdichte besser beeinflusst werden.

Die Körner oder Partikel der Gesteinskörnung gemäß der Erfindung weisen im Wesentlichen Pflanzenverbrennungsaschepartikel, insbesondere Holzverbrennungsaschepartikel, über ihr gesamtes Volumen auf, also auch in ihrem Kernbereich oder Innenbereich. Die Pflanzen- bzw. Holzaschepartikel sind über eine Bindung miteinander unmittelbar oder mittelbar verbunden.

Die Gesteinskörnung weist nach dem Aushärten insbesondere eine Trockenschüttdichte zwischen 0,650 Mg/m³ (1 Mg entspricht 1000 kg oder 1 t)und 1,000 Mg/m³ auf, ist also als Leichtzuschlag verwendbar, und/oder eine Druckfestigkeit zwischen 2 N/mm² und 20 N/mm².

Die Ausgangsmischung kann ferner bis 1 M-% bezogen auf ihre Gesamttrockenmasse Zusatzstoffe zur Verbesserung der Verarbeitung und/oder Eigenschaften der Ausgangsmischung oder der daraus hergestellten Gesteinskörnung, insbesondere Verflüssiger, aufweisen, wobei dann der Massenanteil wenigstens einer der anderen Komponenten entsprechend verringert ist.

Das Abbinden oder Aushärten der Formlinge erfolgt im Allgemeinen bei einer relativen Feuchte von 50 % bis 100 % und/oder bei Temperaturen von 10 °C bis 45 °C, also insbesondere bei normalen Atmosphären-, Umgebungs- oder Lagertemperaturen, sowie unter Atmosphärendruck oder Normaldruck.

Dies hat unter anderem den Vorteil, dass keine weitere Energie zugeführt werden muss.

Die Erfindung wird im Folgenden anhand von Ausführungsbeispielen weiter erläutert.

Es wird in den Ausführungsbeispielen Feuerraumasche aus der Holzverbrennung in Biomasseheizkraftwerken oder anderen Verbrennungsanlagen, in denen nur Frischholz oder Altholz der Altholzkategorie A I oder A II gemäß der Altholzverordnung (Bundesgesetzblatt I 2002, Seite 3302) verbrannt wird, verwendet.

Diese Holzverbrennungs-Feuerraumasche wird zunächst gebrochen (oder auf andere Weise mechanisch verkleinert) und dann abgesiebt, derart, dass man ein Aschematerial der Körnung von 0 bis 2 mm, vorzugsweise 0 bis 1 mm, erhält.

Im Allgemeinen wird der (gebrochenen) Feuerraumasche vor dem Sieben auch Flugasche aus der Holzverbrennung zugesetzt. Beim Sieben werden dann auch unerwünschte Fremdstoffe wie zum Beispiel teilweise unverbrannte Holzpartikel aus der Holzverbrennungs-Flugasche, ebenso wie aus der Feuerraumasche, herausgefiltert. Die Feuerraumasche hat in der Regel einen größeren Anteil an der Holzverbrennungsasche als die Holzverbrennungs-Flugasche, typischerweise 8:1 bis 12:1.

Mit dieser gebrochene und gesiebten Holzverbrennungsasche wird nun zu eine Ausgangsmischung homogen gemischt (oder: homogenisiert) aus den folgenden Bestandteilen:
- 1 bis 10 M.-% Zement,
   insbesondere CEM II/B-M(S-LL) 32,5 R, d.h. Portlandkompositzement mit den Hauptbestandteilen Hüttensand und Kalkstein zwischen 21 und 35 M.-% und der Festigkeitsklasse 32,5 R, nach DIN EN 197 (02.01),
- 20 bis 85 M.-% gebrannter Ton einer Körnung von 0 bis 2 mm, insbesondere 0 bis 1 mm,
   insbesondere bei der Herstellung von Blähton verwendetem oder entstandenem gebranntem Ton (beispielsweise mit einer Zusammensetzung aus etwa 23 M.-% Quarz, etwa 20 M.-% Kaolinit, etwa 33 M.-% Dreischichttonminerale, < 2 M.-% Dolomit, etwa 4 M.-% Kalzit, etwa 7 M.-% Chlorit/Chamosite, etwa 5 M.-% Hämatit, etwa 4 M.-% Feldspat, etwa 1 M.-% Anatas, < 1 M.-% Pyrit) und/oder Metakaolin, insbesondere bei der Blähglasherstellung durch Brennen von Kaolin anfallendes Metakaolin, und/oder bei der Ziegelproduktion verwendeter oder anfallender gebrannter Ton, beispielsweise Ziegelsplitt, -mehl, -bruch oder -schwachbrannt, sowie mit
- 0 bis 35 M.-% Flugasche, insbesondere Steinkohleflugasche (SFA) oder Flugasche nach DIN EN 450, vorzugsweise in Verbindung mit Bauregelliste A- Ausgabe 2006/01 in Mitteilungen, Deutsches Institut für Bautechnik 37 (2006), Sonderheft 33, Teil 1, Anlage 1.6 oder DIN EN 450-1 (05.05) in Verbindung mit Bauregelliste B, Teil 1, Anlage 1/1.5 a.a.O,
- 0 bis 1 M.-% chemische Zusatzstoffe wie Verflüssiger oder ähnliches zur Verbesserung der Verarbeitung und sonstiger Eigenschaften der Mischung und daraus hergestellter Formlinge und Partikel
- und Wasser

Die angegebenen M-% sind auf die Gesamttrockenmasse der Ausgangsmischung ohne Wasser bezogen sind und das Verhältnis Wasser zu Feststoff oder Trockenmasse liegt bei etwa 0,25 bis 0,30 oder, mit anderen Worten, bezogen auf die feuchte Ausgangsmischung mit dem Wasser beträgt der Anteil des Wassers etwa 20 bis 23 M.-% und die Trockenmasse entsprechend 77 bis 80 M.-%.

In allen Ausführungsbeispielen wurden die verwendeten Trockenkomponenten und ggf. chemischen Zusatzmitteln mit Wasser in einer Mischeinrichtung so lange gemischt, bis eine verarbeitungsfähige, im Wesentlichen homogene und feuchte Ausgangsmischung entstand.

Als Mischeinrichtung wurde ein unter der Marke Pflugschar® vertriebener Chargen- oder Granuliermischer der Firma Lödige, Paderborn vom Typ FM130 D oder alternativ ein Mischer der WAMGROUP/EMT verwendet. Die Feststoffe oder Trockenkomponenten werden in diesem Chargenmischer oder Granuliermischer zunächst homogenisiert und dann mit dem Wasser zu der Ausgangsmischung vermischt. Sodann werden in demselben Granuliermischer aus der Ausgangsmischung mit den Feststoffen unter Zugabe von Wasser ein Granulieren durchgeführt und Granalien erzeugt.

Der Chargemischer arbeitet nach dem Prinzip eines sogenannten mechanisch erzeugten Wirbelbetts. In einer horizontalen, zylindrischen Trommel rotieren auf einer Welle angeordnete Mischwerkzeuge, deren Größe, Anzahl, Position, Form und Geschwindigkeit so aufeinander abgestimmt sind, dass sie die Produktkomponente in eine dreidimensionale Bewegung versetzen, was als mechanisch erzeugtes Wirbelbett bezeichnet wird. Die so in Mischgut hervorgehobene Turbulenz bewirkt unter ständiger Erfassung des gesamten Produkts eine schnelle und exakte Vermischung mit hoher Homogenität. Durch die spezielle Form der Werkzeuge wird das Mischgut von der Trommelwand abgehoben und ein Zerstören der Partikel verhindert. Die Mischwirkung des Schleuderwerks wird zusätzlich unterstützt durch den Einsatz separat eingetriebener, hochtourig rotierender Messerköpfe, die im Zusammenwirken mit den Mischwerkzeugen ein Aufschließen von Agglomaraten sowie eine gezielte Granulierung während des Prozesses ermöglichen. Das Mischgut mit dem Wasser oder die feuchte Ausgangsmischung wird also im Chargenmischer durch den Einsatz von separat angetriebenen, hochtourig rotierenden Messerköpfen granuliert.

Die aus der Ausgangsmischung derart erzeugten, noch feuchten Formlinge oder Rohlinge von Zuschlagsgranalien oder Zuschlagspartikelformlinge wurden nun in einem Reifelager, von der Witterung geschützt, über einen Zeitraum von wenigstens sieben Tagen liegen gelassen und gelagert zum Aushärten. In dem Reifelager herrschen für diesen Aushärtevorgang typischerweise normale Temperaturen zwischen 5 °C und 45 °C und Luftfeuchtigkeiten von typischerweise 50 % und 100 %. Die Verweildauer der frischen Granalien in der geschützten Umgebung im Reifelager richtet sich nach den Erhärtungsbedingungen und den verwendeten Materialien sowie den vorliegenden Temperaturen. Die Lagerzeit zum Aushärten der Granalien kann bei höheren Temperaturen und/oder durch Zugabe von Wasserdampf, insbesondere durch hydrothermale Lagerung bei 55 °C verkürzt werden gegenüber einer Lagerung bei Normaltemperatur, beispielsweise 20 °C und normaler Luftfeuchtigkeit, beispielsweise 80 %. Nach der Lagerung im Reifelager erfolgt die weitere Erhärtung der Granalien ungeschützt im Freien. Bei Erreichen eines Alters von 90 Tagen ist die Lagerung der Granalien abgeschlossen und die erhärteten Granalien können als Zuschlagspartikel für Baustoffe wie Beton ausgeliefert werden.

Während des Aushärtevorgangs reagieren einerseits die latent-hydraulischen Komponenten aus der Holzverbrennungsasche und ggf. dem gebrannten Ton mit dem Wasser unter Anregung durch den als Anreger oder Auslöser wirkenden Zement und andererseits puzzolanische Komponenten der verwendeten Flugasche (SFA) und des gebrannten Tones mit dem in der Holzverbrennungsasche enthaltenen freien Kalk, der mit dem Wasser zu Kalkhydrat oder Calciumhydroxid reagiert, und dem Wasser jeweils hydraulisch oder in einer Hydratationsreaktion und bilden eine feste Struktur zum Binden der Aschekörner im Zuschlagspartikel oder in der Granalie. Der Zement dient also hauptsächlich als Anreger oder Auslöser für latent-hydraulische Reaktionen von latent-hydraulischen Komponenten in der Holzverbrennungsasche und ggf. im gebrannten Ton mit Wasser, um auch eine direkte Verbindung oder Bindung der Holzverbrennungsaschepartikel und der gebrannten Tonpartikel durch die latent-hydraulische Reaktion ohne Bindemittel zu ermöglichen. Ebenso dient auch der nicht mit den puzzolanischen Komponenten reagierende Kalk, der in der feuchten Mischung zusammen mit dem Wasser als Kalkhydrat vorliegt, auch als Anreger für die latent-hydraulische Reaktion.

Eventuell verbleibendes Wasser verdunstet mit der Zeit, bis die Ausgleichsfeuchte erreicht ist, die typischerweise um 22 % beträgt.

Die erzeugten Granalien oder Gesetinskörnungspartikel haben eine Partikelgröße von etwa 2 bis etwa 10 mm. Die Feuerraumaschepartikel bilden einen Grobstoff mit einer Partikelgröße bis 1 mm, insbesondere 2 mm, in den ausgehärteten Partikeln oder Granalien und sind über das gesamte Volumen der Zuschlagspartikel verteilt, also im Innern wie außen anzufinden. Die Flugasche und teilweise der gebrannte Ton füllen als Feinstoffe in den Zuschlagspartikeln Zwischenräume oder Zwickel zwischen den gröberen Feuerraumaschepartikeln wenigstens teilweise aus.

### Ausführungsbeispiel 1

Es wird die folgende feuchte Ausgangsmischung verwendet.

| | |
|---|---|
| Zement | 8 M.-% in Trockenmasse |
| Flugasche | 20 M.-% in Trockenmasse |
| gebrannter Ton | 52 M.-% in Trockenmasse |
| Holzverbrennungsasche | 20 M.-% in Trockenmasse |
| Wasser | zusätzlich 28 M.-% zu 100 M.-% Trockenmasse, also 21,88 M-% in feuchter Mischung |

Die damit hergestellten und erhärteten Granalien hatten eine Trockenschüttdichte von ca. 0,85 Mg/m³ und eine Druckfestigkeit von 11,8 N/mm².

### Ausführungsbeispiel 2

Es werden folgende Bestandteile mit Wasser angemacht zum Herstellen der feuchten Ausgangsmischung:

| | |
|---|---|
| Zement | 5 M.-% in Trockenmasse |
| Flugasche | 38 M.-% in Trockenmasse |
| gebrannter Ton | 25 M.-% in Trockenmasse |
| Holzverbrennungsasche | 32 M.-% in Trockenmasse |
| Wasser | zusätzlich 29 M.-% zu 100 M.-% Trockenmasse, also 22,48 M-% in feuchter Mischung |

Die damit hergestellten und erhärteten Granalien hatten eine Trockenschüttdichte von ca. 0,8 Mg/m³ und eine Druckfestigkeit von ca. 6,0 N/mm².

### Ausführungsbeispiel 3

Die Zusammensetzung der Ausgangsmischung betrug

| | |
|---|---|
| Zement | 10 M.-% in Trockenmasse |
| Flugasche | 0 M.-% in Trockenmasse |
| gebrannter Ton | 61,4 M.-% in Trockenmasse |
| Holzverbrennungsasche | 28 M.-% in Trockenmasse |
| Wasser | zusätzlich 29 M.-% zu 100 M.-% Trockenmasse, also 22,48 M-% in feuchter Mischung |
| Fließmittel als Zusatzmittel | 0,6 M-% |

Die damit hergestellten und erhärteten Granalien hatten eine Trockenschüttdichte von ca. 1,0 Mg/m³ und eine Druckfestigkeit von ca. 17,6 N/mm².

## Patentansprüche

1. Verfahren zum Herstellen einer Gesteinskörnung, insbesondere Leichtzuschlags-Gesteinskörnung, insbesondere für Baumaterialien, vorzugsweise Beton, mit den folgenden Verfahrensschritten:
a) Herstellen einer homogenen Ausgangsmischung aus
• 1 bis 10 M.-% (Masseprozent) Zement,
• 20 bis 85 M.-% gebranntem Ton,
• 10 bis 40 M.-% Pflanzenverbrennungsasche,
• 0 bis 35 M.-% Flugasche
• 0 bis 1 M.-% Zusatzstoffe,
• Wasser,
wobei die angegebenen M-% auf die Gesamttrockenmasse der
Ausgangsmischung bezogen sind und
wobei das Verhältnis der Masse des Wassers zu der Gesamttrockenmasse der Ausgangsmischung zwischen 0,20 und 0,35 beträgt.
b) Herstellen von Formlingen aus der Ausgangsmischung,
c) Abbinden der Formlinge bei Abbindetemperaturen unter 80 °C, wobei die Formlinge zu Partikeln der Gesteinskörnung erhärten.

2. Verfahren nach Anspruch 1, bei dem die Pflanzenverbrennungsasche Partikelgrößen bis zu einer Maximalpartikelgröße, die in einem Bereich von 1 mm bis 2 mm gewählt ist, aufweist und/oder bei dem die Pflanzenverbrennungsasche Partikelgrößen von 0 mm bis zur Maximalpartikelgröße aufweist.

3. Verfahren nach Anspruch 1 oder Anspruch 2, bei dem die Pflanzenverbrennungsasche Holzverbrennungsasche ist oder enthält, wobei insbesondere das verbrannte Holz für die Holzverbrennungsasche Frischholz und/oder niedrig belastetes Altholz ist.

4. Verfahren nach einem der vorhergehenden Ansprüche, bei dem die Pflanzenverbrennungsasche wenigstens 50 M.-% bezogen auf ihre Trockenmasse bei der Verbrennung der Pflanzen zurückbleibende Feuerraumasche enthält.

5. Verfahren nach Anspruch 4, bei dem mechanisch zerkleinerte und gesiebte Feuerraumasche für die Pflanzenverbrennungsasche verwendet wird, wobei vorzugsweise die Feuerraumasche zur mechanischen Zerkleinerung gebrochen wird, insbesondere mit einem Walzenbrecher.

6. Verfahren nach einem der vorhergehenden Ansprüche, bei dem die Pflanzenverbrennungsasche wenigstens 25 M.-%, bezogen auf ihre Trockenmasse, Kalk enthält und/oder bei dem die Pflanzenverbrennungsasche latent-hydraulische Eigenschaften oder Komponenten aufweist, wobei vorzugsweise Pflanzenverbrennungsaschepartikel durch hydraulische Reaktion ihrer latent-hydraulischen Komponenten mit dem Wasser unter dem Einfluss des Zements als Anreger in Bindung miteinander gebracht werden.

7. Verfahren nach einem der vorhergehenden Ansprüche, bei dem der gebrannte Ton puzzolanische Eigenschaften oder Komponenten aufweist, wobei vorzugsweise die puzzolanischen Komponenten des Tons mit dem Wasser und dem Kalk der Pflanzenverbrennungsasche hydraulisch reagieren, und/oder bei dem der gebrannte Ton Partikelgrößen bis zu einer Maximalpartikelgröße, die in einem Bereich von 1 mm bis 2 mm gewählt ist, aufweist, wobei vorzugsweise der gebrannte Ton Partikelgrößen von 0 mm bis zur Maximalpartikelgröße aufweist, und/oder bei dem der gebrannte Ton wenigstens teilweise ein bei der Herstellung von Blähton verwendeter oder entstandener gebrannter Ton ist und/oder bei dem der gebrannte Ton wenigstens teilweise Metakaolin, insbesondere bei der Herstellung von Blähglas anfallendes Metakaolin, ist und/oder bei dem der gebrannte Ton wenigstens teilweise bei der Ziegelproduktion verwendeter oder anfallender gebrannter Ton, beispielsweise Ziegelsplitt, -mehl, -bruch oder - schwachbrannt, ist.

8. Verfahren nach einem der vorhergehenden Ansprüche, bei dem die Flugasche aus der Verbrennung von Kohle, insbesondere Steinkohle, stammt oder Flugasche nach DIN EN 450 oder DIN EN 450-1 enthält oder ist und/oder bei dem der Zement ein Portlandzement, insbesondere Portlandkompositzement, vorzugsweise CEM II/B-M (S-LL), ist.

9. Verfahren nach einem der vorhergehenden Ansprüche, bei dem das Abbinden der Formlinge bei einer relativen Feuchte von 50 % bis 100 % und/oder bei Temperaturen von 5 °C bis 45 °C erfolgt.

10. Gesteinskörnung, insbesondere Leichtzuschlagsgesteinskörnung, insbesondere für Baumaterialien, vorzugsweise Beton, mit Partikeln, die enthalten:
• 1 bis 10 M.-% (Massenprozent) erhärteten Zement,
• 0 bis 35 M.-% Flugaschepartikel,
• 20 bis 85 M.-% gebrannte Tonpartikel,
• 10 bis 40 M.-% Pflanzenverbrennungsaschepartikel,
• 0 bis 1 M.-% Zusatzstoffe,
wobei die Summe der M-% aller enthaltenen Stoffe 100 M.-% beträgt.

11. Gesteinskörnung nach Anspruch 10, bei der die Partikel über ihr gesamtes Volumen durchgehend Pflanzenverbrennungsaschepartikel aufweisen und/oder bei der Pflanzenverbrennungsaschepartikel über eine latent-hydraulische Bindung miteinander verbunden sind und/oder bei der die Pflanzenverbrennungsaschepartikel Partikelgrößen bis zu einer Maximalpartikelgröße, die in einem Bereich von 1 mm bis 2 mm gewählt ist, aufweisen, vorzugsweise von 0 mm bis zur Maximalpartikelgröße, und/oder bei der die gebrannten Tonpartikel Partikelgrößen bis zu einer Maximalpartikelgröße, die in einem Bereich von 1 mm bis 2 mm gewählt ist, aufweisen, vorzugsweise von 0 mm bis zur Maximalpartikelgröße.

12. Gesteinskörnung nach Anspruch 10 oder Anspruch 11, hergestellt nach einem Verfahren gemäß einem der Ansprüche 1 bis 9.

## Claims

1. Method for production of a rock granulate, in particular a lightweight aggregate rock granulate, in particular for building materials, preferably concrete, with the following method steps:
a) production of a homogeneous starting mixture of
- 1 to 10 m.% (mass percent) cement
- 20 to 85 m.% fired clay
- 10 to 40 m.% plant combustion ash
- 0 to 35 m.% fly ash
- 0 to 1 m.% additives
- water,
wherein the given m.% figures relate to the total dry mass of the starting mixture, and
wherein the ratio of the mass of water to the total dry mass of the starting mixture is between 0.20 and 0.35,
b) production of formed bodies from the starting mixture,
c) setting of the formed bodies at setting temperatures below 80°C, wherein the formed bodies harden into particles of the rock granulate.

2. Method according to claim 1, in which the plant combustion ash has particle sizes up to a maximum particle size selected in a range from 1 mm to 2 mm and/or in which the plant combustion ash has particle sizes from 0 mm to the maximum particle size.

3. Method according to claim 1 or claim 2, in which the plant combustion ash is or contains wood combustion ash, where in particular the burned wood for the wood combustion ash is fresh wood and/or low contamination old wood.

4. Method according to any of the preceding claims, in which the plant combustion ash contains at least 50 m.% in relation to its dry mass of furnace ash remaining after plant combustion.

5. Method according to claim 4, In which mechanically comminuted and sieved furnace ash is used for the plant combustion ash, wherein preferably the furnace ash is crushed for mechanical comminution, in particular with a roller crusher.

6. Method according to any of the preceding claims, in which the plant combustion ash contains at least 25 m.% lime in relation to its dry mass, and/or in which the plant combustion ash has latent-hydraulic properties or components, wherein preferably plant combustion ash particles are brought to bind with each other by hydraulic reaction of their latent-hydraulic components with water under the Influence of cement as an exciter.

7. Method according to any of the preceding claims, in which the fired clay has pozzolanic properties or components, wherein preferably the pozzolanic components of the clay react hydraulically with the water and the lime in the plant combustion ash, and/or in which the fired clay has particle sizes up to a maximum particle size selected in the range from 1 mm to 2 mm, wherein preferably the fired clay has particle sizes from 0 mm to the maximum particle size, and/or in which the fired clay Is at least partly a fired clay used or generated on production of swelling clay and/or in which the fired clay is at least partly metakaolin, in particular metakaolin occurring in the production of swelling clay, and/or in which the fired clay is at least partly fired clay used or occurring in brick production, for example stone chips, powder, fragments or lightly burned brick.

8. Method according to any of the preceding claims, in which the fly ash is generated from the combustion of coal, in particular hard coal, or contains or is fly ash to DIN EN 450 or DIN EN 450-1 and/or in which the cement is a Portland cement, in particular a Portland composite cement, preferably CEM II/B-M (S-LL).

9. Method according to any of the preceding claims, in which the setting of the formed bodies takes place under a relative humidity from 50% to 100% and/or at temperatures from 5°C to 45°C.

10. Rock granulate, in particular a lightweight aggregate rock granulate, in particular for building materials, preferably concrete, with particles, which contains:
- 1 to 10 m.% (mass percent) hardened cement
- 0 to 35 m.% fly ash particles
- 20 to 85 m.% fired clay particles
- 10 to 40 m.% plant combustion ash particles
- 0 to 1 m.% additives
where the sum of the m.% of all substances contained amounts to 100 m.%.

11. Rock granulate according to claim 10, in which the particles have plant combustion ash particles throughout their entire volume and/or in which the plant ash combustion particles are linked together via a latent-hydraulic binding and/or in which the plant combustion ash particles have particle sizes up to a maximum particle size selected in a range from 1 mm to 2 mm, preferably from 0 mm to the maximum particle size, and/or in which the fired clay particles have particle sizes up to a maximum particle size selected in a range from 1 mm to 2 mm, preferably from 0 mm to the maximum particle size.

12. Rock granulate according to claim 10 or claim 11, produced in a method according to any of claims 1 to 9.

## Revendications

1. Procédé pour réaliser un agrégat, en particulier un agrégat léger, en particulier pour des matériaux de construction, de préférence du béton, avec les étapes de procédé suivantes:
a) Préparation d'un mélange de départ homogène de
• 1 à 10 % en m. (pour cent en masse) de ciment,
• 20 à 85 % en m. d'argile cuite,
• 10 à 40 % en m. de cendre de combustion de végétaux,
• 0 à 35 % en m. de cendre volante,
• 0 à 1 % en m. d'additifs,
• de l'eau,
sachant que les % en m. se rapportent à la masse totale sèche du mélange de départ et
sachant que le rapport de la masse de l'eau à la masse sèche totale du mélange de départ est compris entre 0,20 et 0,35.
b) fabrication de granulés en le mélange de départ,
c) prise des granulés à des températures de prise en dessous de 80 °C, les granulés durcissant pour donner les particules de l'agrégat.

2. Procédé selon la revendication 1, dans lequel la cendre de combustion de végétaux comporte des tailles de particule jusqu'à une taille de particule maximale qui est choisie dans un intervalle de 1 mm à 2 mm et/ou dans lequel la cendre de combustion de végétaux comporte des tailles de particule de 0 mm jusqu'à la taille de particule maximale.

3. Procédé selon la revendication 1 ou la revendication 2, dans lequel la cendre de combustion de végétaux est une cendre de combustion de bois ou en contient, sachant qu'en particulier le bois brûlé pour la cendre de combustion de bois est du bois frais et/ou un vieux bois faiblement chargé.

4. Procédé selon l'une quelconque des revendications précédentes, dans lequel la cendre de combustion de végétaux contient au moins 50 % en m., rapportés à sa masse sèche, de cendres de foyer restant lors de la combustion des végétaux.

5. Procédé selon la revendication 4, dans lequel une cendre de foyer fragmentée mécaniquement et tamisée est utilisée pour la cendre de combustion de végétaux, sachant que de préférence la cendre de foyer est brisée pour la fragmentation mécanique, en particulier avec un concasseur à cylindres.

6. Procédé selon l'une quelconque des revendications précédentes, dans lequel la cendre de combustion de végétaux contient au moins 25 % en m. de chaux, rapportés à sa masse sèche, et/ou la cendre de combustion de végétaux présente des propriétés ou des composants hydrauliques latents, sachant que de préférence les particules de cendre de combustion de végétaux sont amenées en liaison les unes avec les autres par réaction hydraulique avec l'eau de leurs composants hydrauliques latents sous l'influence du ciment comme excitateur.

7. Procédé selon l'une quelconque des revendications précédentes, dans lequel l'argile cuite présente ou comporte des propriétés ou des composants de pouzzolane, sachant que, de préférence, les composants de pouzzolane de l'argile réagissent hydrauliquement avec l'eau et la chaux de la cendre de combustion de végétaux et/ou dans lequel l'argile cuite présente des tailles de particule jusqu'à une taille de particule maximale qui est choisie dans un intervalle de 1 mm à 2 mm, sachant que, de préférence, l'argile cuite présente des tailles de particule de 0 mm jusqu'à la taille de particule maximale et/ou dans lequel l'argile cuite est au moins en partie une argile cuite utilisée ou produite lors de la préparation d'une argile expansée, et/ou dans lequel l'argile cuite est au moins en partie du métakaolin, en particulier du métakaolin produit lors de la fabrication du verre expansé, et/ou dans lequel l'argile cuite est au moins en partie de l'argile cuite utilisée ou produite lors de la production de briques, par exemple, des gravillons, de la poudre, des fragments ou de l'argile faiblement cuite de brique.

8. rocédé selon l'une quelconque des revendications précédentes, dans lequel la cendre volante provient de la combustion de charbon, en particulier de houille, ou contient ou est de la cendre volante selon DIN EN 450 ou DIN EN 450-1, et/ou dans lequel le ciment est un ciment Portland, en particulier un ciment Portland composite, de préférence CEM II/B-M (S-LL).

9. Procédé selon l'une quelconque des revendications précédentes, dans lequel la prise des granulés s'effectue à une humidité relative de 50 % à 100 % et/ou à des températures de 5 °C à 45 °C.

10. Agrégat, en particulier agrégat léger, en particulier pour des matériaux de construction, de préférence du béton, avec des particules qui contiennent:
• 1 à 10 % en m. (pourcents en masse) de ciment durci,
• 0 à 35 % en m. de particules de cendre volante,
• 20 à 85 % en m. de particules d'argile cuite,
• 10 à 40 % en m. de particules de cendre de combustion de végétaux,
• 0 à 1 % en m. d'additifs,
la somme des % en m. de toutes les substances contenues étant de 100 % en m.

11. Agrégat selon la revendication 10, dans lequel les particules comportent de façon continue, sur tout leur volume, des particules de cendre de combustion de végétaux et/ou dans laquelle les particules de cendre de combustion de végétaux sont liées entre elles par une liaison hydraulique latente et/ou dans laquelle les particules de cendre de combustion de végétaux présentent des tailles de particule jusqu'à une taille de particule maximale qui est choisie dans un intervalle de 1 mm à 2 mm, de préférence de 0 mm jusqu'à la taille de particule maximale et/ou dans laquelle les particules d'argile cuite présentent des tailles de particule jusqu'à une taille de particule maximale qui est choisie dans un intervalle de 1 mm à 2 mm, de préférence de 0 mm jusqu'à la taille de particule maximale.

12. Agrégat selon la revendication 10 ou la revendication 11, produit d'après un procédé selon l'une quelconque des revendications 1 à 9.
